(19) Europäisches Patentamt
European Patent Office
Office européen des brevets

(11) **EP 2 996 408 A1**

(12) **EUROPEAN PATENT APPLICATION**

(43) Date of publication:
**16.03.2016 Bulletin 2016/11**

(51) Int Cl.:
**H04W 52/02** (2009.01)

(21) Application number: **15158396.0**

(22) Date of filing: **10.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **11.09.2014 JP 2014185402**

(71) Applicant: **Kabushiki Kaisha Toshiba
Tokyo 105-8001 (JP)**

(72) Inventor: **Suzuki, Tomoya
Tokyo, 105-8001 (JP)**

(74) Representative: **Hoffmann Eitle
Patent- und Rechtsanwälte PartmbB
Arabellastraße 30
81925 München (DE)**

(54) **Wireless communication device and controlling method thereof**

(57) According to one embodiment, a wireless communication device includes a reception circuit receiving a frame including first and second data units, the first and second data units each including first and second data areas, the first data area including channel bandwidth information; and a control circuit controlling the reception circuit. The reception circuit receives the first data area with a first frequency bandwidth corresponding to a first channel bandwidth for the first data unit. When the channel bandwidth information indicates a second channel bandwidth, the control circuit switches, before reception of the second data, a frequency bandwidth of the reception circuit to a second frequency bandwidth corresponding to the second channel bandwidth.

F I G. 1

**Description**

FIELD

The present embodiment relates to a wireless communication device and a controlling method thereof.

BACKGROUND

A wireless communication function is provided in various types of electronic equipment.

There has been a demand to reduce the power consumption of devices (wireless communication devices) equipped with the wireless communication function.

BRIEF DESCRIPTION OF THE DRAWINGS

Fig. 1 is a diagram depicting a general configuration of a wireless communication system including a wireless communication device according to an embodiment;

Fig. 2 is a diagram depicting a configuration example of the wireless communication device according to the embodiment;

Fig. 3 is a diagram depicting a data format used for the wireless communication device according to the embodiment;

Fig. 4 is a diagram illustrating the wireless communication device according to the embodiment;

Fig. 5 is a diagram illustrating the wireless communication device according to the embodiment;

Fig. 6 is a diagram illustrating an operation example of the wireless communication device according to the embodiment;

Fig. 7 is a diagram illustrating an operation example of the wireless communication device according to the embodiment;

Fig. 8 is a diagram illustrating a modification of the wireless communication device according to the embodiment;

Fig. 9 is a diagram illustrating a modification of the wireless communication device according to the embodiment;

Fig. 10 is a diagram illustrating a modification of the wireless communication device according to the embodiment;

Fig. 11 is a diagram illustrating a modification of the wireless communication device according to the embodiment;

Fig. 12 is a diagram illustrating a modification of the wireless communication device according to the embodiment; and

Fig. 13 is a diagram illustrating a modification of the wireless communication device according to the embodiment.

DETAILED DESCRIPTION

The present embodiment will be described below with reference to the drawings. In the description below, elements with the same functions and configurations are denoted by the same reference numerals, and duplicate descriptions are omitted.

In general, according to one embodiment, the wireless communication device includes a reception circuit receiving a data frame including first and second data units, the first and second data units each including a first data area and a second data area following the first data area, the first data area including channel bandwidth information of the data frame; and a control circuit controlling the reception circuit based on the channel bandwidth information. The reception circuit receives the first data area of the first data unit with a first frequency bandwidth corresponding to a first channel bandwidth for the first data unit, when the channel bandwidth information is indicative of a second channel bandwidth different from the first channel bandwidth, the control circuit switches, before the reception circuit receives the second data, a frequency bandwidth of the reception circuit to a second frequency bandwidth corresponding to the second channel bandwidth.

[Embodiment]

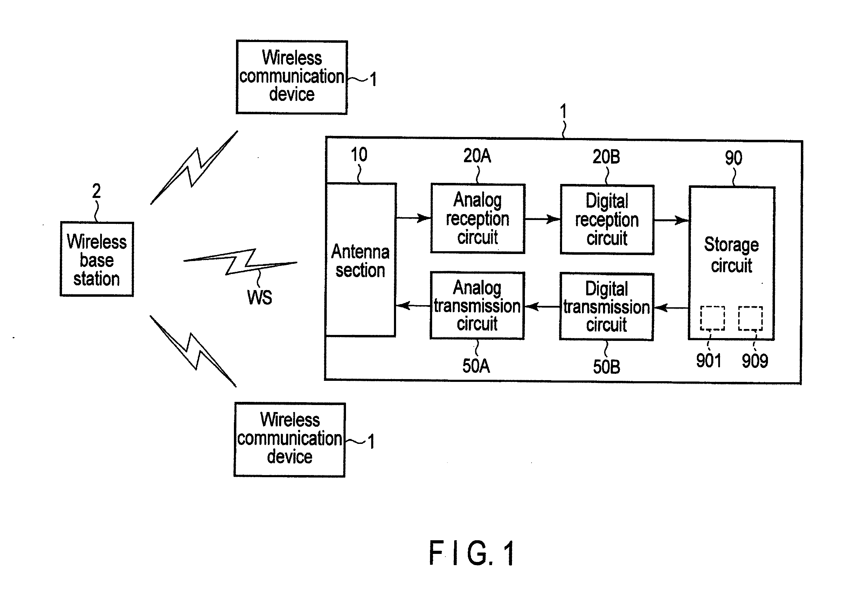

A wireless communication device according to an embodiment will be described with reference to Figures 1 through 7.

(a) Configuration

Fig. 1 is a block diagram of a wireless communication system according to the present embodiment.

The wireless communication system includes a wireless base station (for example, an access point) 2 and one or more wireless communication devices 1. The wireless communication network is provided by their devices 1 and 2.

The wireless communication devices 1 according to the embodiment communicate wirelessly with the wireless communication station 2.

Wireless signals WS are transferred between the wireless communication station 2 and the wireless communication devices 1 by wireless communication based on a certain standard.

The wireless communication station 2 is connected to a server (not depicted in the drawings), for example, by wireless communication. The wireless communication station 2 may be connected to the server, for example, via a LAN cable. The wireless communication station 2 may be connected to the server via an Internet service provider using a metal cable, optical fibers, or the like.

At least one of the plurality of wireless communication devices 1 is the wireless communication device 1 according to the embodiment.

The wireless communication device 1 according to the embodiment includes an antenna section 10, reception circuits 20A and 20B, transmission circuits 50A and 50B, and a storage circuit 90.

The antenna section 10 receives data (wireless signals) from the wireless communication station 2. The antenna section 10 transmits data from the inside of the wireless communication device 1 to the wireless communication station 2. The antenna section 10 has, for example, an MIMO (Multiple Input Multiple Output) configuration and includes a plurality of antennas.

The analog reception circuit 20A performs amplification, frequency conversion, filtering, and AD conversion on wireless signals (analog signals) received by the antenna section 10.

An output from the analog reception circuit 20A is processed by the digital reception circuit 20B, and the resultant output is stored in the storage circuit 90.

The digital reception circuit 20B executes reception processing in a physical layer, control of the analog reception circuit 20A, and the like. The digital reception circuit 20B can execute reception processing for a physical layer standard used for wireless communication WS and analyze various types of information on reception data included in the received wireless signal WS.

The digital transmission circuit 50B executes transmission processing in the physical layer, control of the analog transmission circuit 50A, and the like. The digital transmission circuit 50B can execute transmission processing for the physical layer standard used for the wireless communication and generate various types of information on transmitted data.

An output from the digital transmission circuit 50B is processed by the analog transmission circuit 50A.

The analog transmission circuit 50A performs DA conversion, filtering, frequency conversion, and signal amplification on a digital signal from the digital transmission circuit 50B in order to generate a wireless signal WS to be transmitted.

The wireless communication device 1 includes the storage circuit 90. The storage circuit 90 stores data from the digital reception circuit 20B. The data in the storage circuit 90 are read by the digital transmission circuit 50B. The storage circuit 90 includes semiconductor memory such as flash memory 901 and DRAM 909. The storage circuit 90 may include MRAM, an HDD, or an SSD.

When the wireless signal WS is received, a signal (data based on the wireless signal WS) from the analog reception circuit 20A is processed by the digital reception circuit 20B, and the resultant signal is stored in the storage circuit 90. When the wireless signal WS is transmitted, a signal from the storage circuit 90 is processed by the digital transmission circuit 50B, and the resultant signal is output to the analog transmission circuit 50A.

The wireless communication device 1 according to the embodiment is, for example, a portable terminal such as a Smartphone or a PC. The wireless communication device 1 according to the embodiment transmits and receives data in a format based on a certain wireless communication standard as the wireless signal WS.

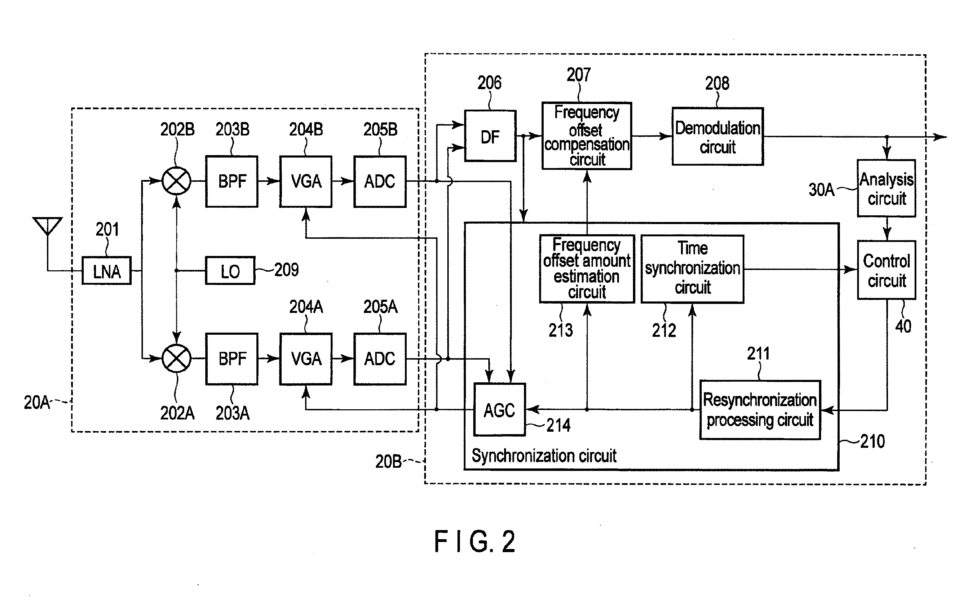

Fig. 2 is a block diagram illustrating an internal configuration example of the analog reception circuit 20A and the digital reception circuit 20B in the wireless communication device 1 according to the embodiment. For simplification of description, Fig. 2 depicts circuits for one antenna.

The analog reception circuit 20A of the wireless communication device 1 includes a low-noise amplification circuit (LNA) 201, mixer circuits 202A and 202B, band pass filters (BPF) 203A and 203B, variable gain amplification circuits (VGA) 204A and 204B, and AD conversion circuits (ADC) 205A and 205B.

The LNA 201 is connected to the antenna section (one antenna) 10. The LNA 201 amplifies the wireless signal WS received by the antenna section 10 using a certain gain (first gain). A gain for the LNA 204 is variable and is controlled by, for example, a synchronization circuit 210 in the digital reception circuit 20B.

The mixer circuits 202A and 202B are connected to the LNA 201. A local oscillation circuit 209 is connected to the mixer circuits 202A and 203B. The local oscillation circuit 209 supplies a local oscillation signal to the mixer circuits 202A and 202B as an oscillation signal. The mixer circuits 202A and 202B mix (multiply) the signal from the LNA 201 with the oscillation signal from the local oscillation circuit 209. The oscillation frequency of the local oscillation signal is controlled by the digital reception circuit 20B.

The BPFs 203A and 203B are connected to the mixer circuits 202A and 202B, respectively. The BPFs 203A and 203B remove, from output signals from the mixer circuits 202A and 202B, signals with frequency components that fall outside the range of a reception frequency bandwidth (hereinafter also referred to as a filter bandwidth) set for the BPFs 203A and 203B, to take out signals with frequency components within the frequency band set for the BPFs 203A and 203B. BPFs 203 are variable BPFs, and the bandwidths of the BPFs 203A and 203B are variable. The bandwidths of the BPFs 203A and 203B are controlled by the digital reception circuit 20B.

The VGAs 204A and 204B are connected to the BPFs 203A and 203B, respectively. The VGAs 204A and 204B amplify signals having passed through the BPFs 203 using a certain gain (second gain). The gains of the VGAs 204A and 204B are variable. For example, the magnitudes of the gains of the VGAs 204A and 204B are controlled by the synchronization circuit 210 in the digital reception circuit 20B.

The ADCs 205A and 205B are connected to the VGAs 204A and 204B, respectively. The ADCs 205A and 205B convert output signals (analog signals) from the VGAs 204A and 204B into digital signals. The conversion rates (sampling rates) of the ADCs 205A and 205B are variable. The sampling rates are controlled by the digital reception circuit 20B.

The two mixer circuits 202A and 202B in the analog reception circuit 20A depicted in Fig. 2 generate I/Q signals. The mixer circuit 202A generates an I (in-phase) signal with components that are in phase with the components of a local signal (local oscillation signal). The BPF 203A, VGA 204A, and ADC 205A located downstream of the mixer circuit 202A execute the above-described various types of processing on an I signal output by the I channel side (in-phase component side) mixer circuit 202A. The mixer circuit 202B generates a Q (quadrature-phase) signal with components orthogonal to a local signal supplied via a phase conversion circuit (not depicted in the drawings). The BPF 203B, VGA 204B, and ADC 205B execute the above-described various types of processing on the Q signal output by the Q channel side (quadrature component side) mixer circuit 202B.

The digital reception circuit 20B includes a digital filter (DF) 206, a frequency offset compensation circuit 207, a synchronization circuit 210, and a demodulation circuit 208.

The DF 206 is connected to the ADCs 205A and 205B. The DF 206 removes, from output signals (for example, digital I/Q signals) from the ADCs 205A and 205B, signals with frequency components that fall outside a frequency bandwidth set for the DF 206, to take out signals with frequency components within the frequency band set for the DF 206. For example, the reception frequency bandwidth of the DF 206 is variable.

The frequency offset compensation circuit 207 is a circuit that compensates for (eliminates) the offset (shift) of a frequency from a communication target device. The frequency offset compensation circuit 207 compensates the frequency offset of a signal from the DF 206 in accordance with the offset amount of the frequency given by the synchronization circuit 210.

The demodulation circuit 208 is connected to the frequency offset compensation circuit 207. The demodulation circuit 208 demodulates an output from the frequency offset compensation circuit 207. Demodulation of the I/Q signal serves to reduce the adverse effect of noise such as interference to generate a data signal corresponding to the wireless signal WS.

Various types of processing in layers following a MAC layer are executed on an output signal from the demodulation circuit 208. The resultant output signal is stored in the storage circuit 90.

An analysis circuit 30 and a control circuit 40 control the operations of and settings for circuits in the reception circuits 20A and 20B based on the analysis result of the wireless signal WS.

The synchronization circuit 210 includes a time synchronization circuit 212, frequency offset amount estimation circuit 213, an automatic gain control circuit (AGC) 214, and a resynchronization processing circuit 211.

The time synchronization circuit 212 detects which part of a reception frame is now being received based on a received signal, and reports the result of the detection to the control circuit 40.

The frequency offset amount estimation circuit 213 is a circuit that estimates the amount of frequency offset from the communication target device based on a received signal.

The AGC 214 detects the magnitude of a reception signal, and adjusts the gains of the LNA 201 and the VGAs 204A and 204B in the analog reception circuit 20A so that signals input to the ADCs 205A and 205B have an amplitude of an appropriate magnitude.

The resynchronization processing circuit 211 adjusts deviations of set values for the synchronization circuit 210 resulting from a change in a frequency bandwidth and a center frequency for reception. The resynchronization processing circuit 211 adjusts a deviation of the gain of the AGC 214. The resynchronization processing circuit 211 adjusts a deviation of the time in the time synchronization circuit 212. The resynchronization processing circuit 211 adjusts a deviation of the offset value of the frequency offset amount estimation circuit 213. The adjustment of the set values made by the resynchronization processing circuit 211 will be described below in detail. The operation of the resynchronization processing circuit 211 is controlled by the control circuit 40.

For example, the wireless communication device 1 according to the embodiment communicates wirelessly based on the IEEE 802.11ac standard. The wireless communication device 1 based on the IEEE 802.11ac standard operates, for example, in a 5-GHz band. In this case, the wireless communication station 2 is associated with wireless LAN terminals (not depicted in the drawings) to form a BSS (Basic Service Set).

In the present embodiment, a frame (data frame) is treated as the wireless signal WS.

In transmission and reception data as the wireless signal WS, transmission and reception data on a transmission and reception circuit side of the MAC layer may be referred to as "frames", whereas transmission and reception data on a control circuit side of the MAC layer may be referred to as "packets"; the MAC layer corresponds to a boundary between the two sides. The packet is data with a data structure into which the transmission and reception data are assembled and which can be handled by devices such as personal computers. The frame is data assembled so that the data can be communicated by wireless communication. In the present embodiment, for simplification of description, transmission and reception data (wireless signals) used in wireless communication performed by the wireless communication device 1 are all referred to as frames.

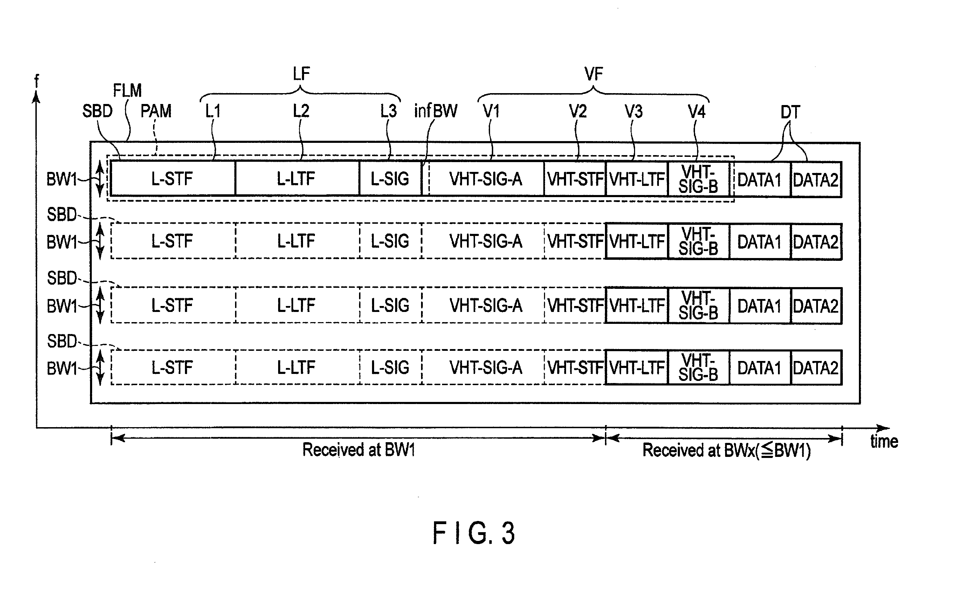

Fig. 3 is a diagram illustrating an example of the format of a frame FLM used for the wireless communication device 1 according to the embodiment.

As depicted in Fig. 3, when the communication standard used for the wireless communication device 1 is the IEEE 802.11ac, the frame FLM, which is the wireless signal WS, can be regarded as being composed of a plurality of subbands SBD.

Each subband SBD has a center frequency different from each other and a bandwidth on the basis of the center frequency.

Subbands SBD are arranged in parallel along a direction of a frequency axis direction on the common time axis (in a period based on the frame standard) in the frame FLM.

Each subband SBD includes a preamble (first data area) PAM and user data (second data area) DT.

The preamble PAM includes various types of control information used to transmit and receive frames or subbands based on the wireless communication standard applied to the wireless communication system. The preamble PAM includes a plurality of fields. The preamble PAM based on the IEEE 802.11ac standard includes a legacy field LF and a VHT field VF.

The legacy field LF includes an L-STF (Legacy-Short Training Field) L1, an L-LTF (Legacy-Long Training Field) L2, and an L-SIG (Legacy-SIGnal field) L3. The fields L1, L2, and L3 of the legacy field LF include various types of control information for a legacy mode such as a data transmission rate. The digital reception circuit 20B uses the fields in the legacy field LF to execute synchronization processes for gain, frequency, and time.

The VHT field VF includes a VHT-SIG-A (Very High Throughput-SIGnal field-A) V1, a VHT-STF (Very High Throughput-Short Training Field) V2, a VHT-LTF (Very High Throughput-Long Training Field) V3, and a VHT-SIG-B (Very High Throughput-SIGnal field-B) V4.

The VHT-SIG-A V1 includes information infBW on a reception channel bandwidth for the user data DT in the frame FLM. For example, the channel bandwidth information infBW in the frame FLM is represented by 2-bit data.

The VHT-STF V2, the VHT-LTF V3, and the VHT-SIG-B V4 include various types of control information for a VHT mode in the frame FLM.

The frame FLM is input to the receiving wireless communication device 1 starting with the preamble PAM. Succeeding the preamble PAM, data DT1 and DT2 are input to the wireless communication device 1.

In the wireless communication device 1 based on the IEEE 802.11ac standard, the channel bandwidth (transmission frequency bandwidth) for the frame FLM is set to one of the following: 20 MHz, 40 MHz, 80MHz, and 160 MHz. The frame FLM is transmitted and received using the selected channel bandwidth.

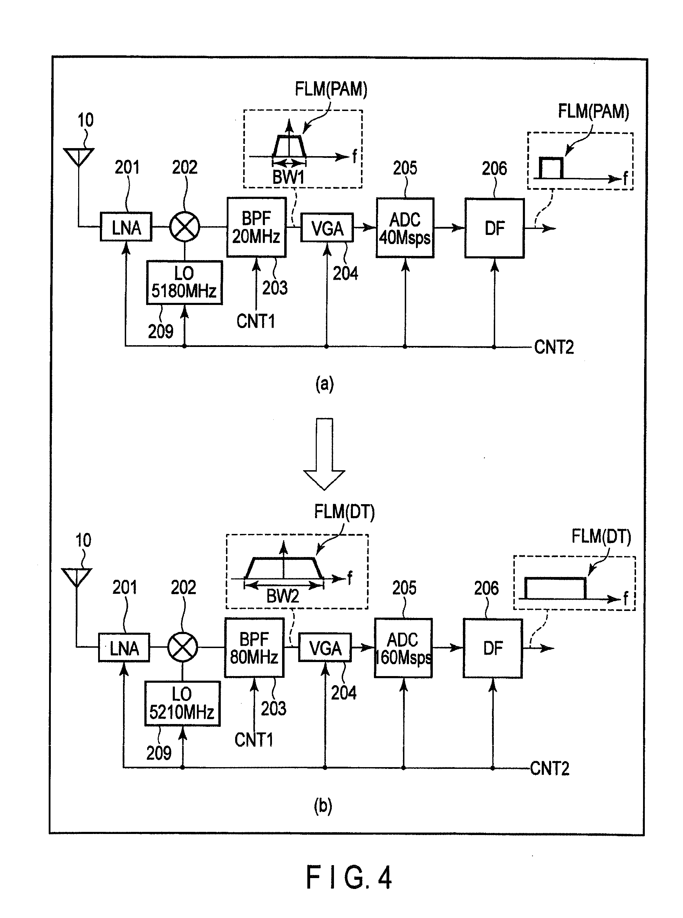

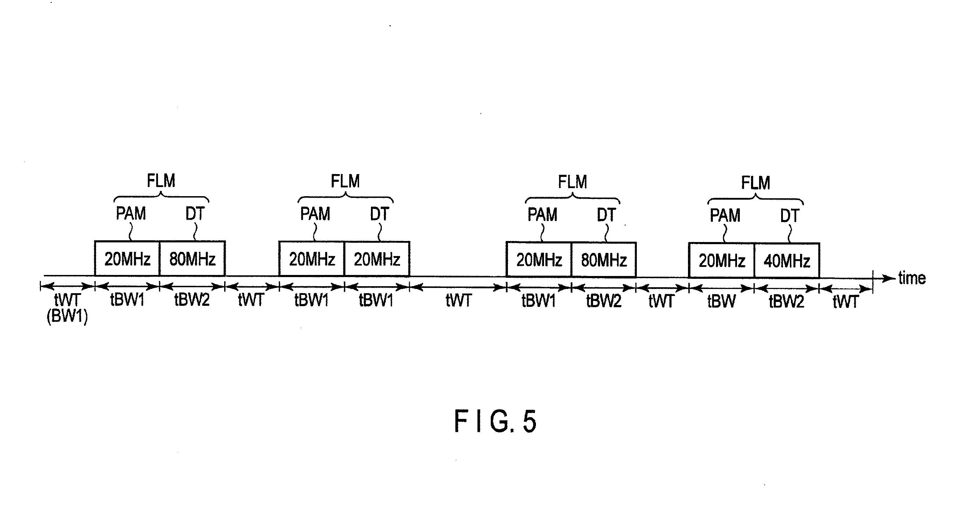

Fig. 4 and Fig. 5 are schematic diagrams illustrating the operation and functions of the wireless communication device 1 according to the embodiment. Fig. 4 depicts only the circuits on one of the I and Q channel sides for simplification of description.

The wireless communication device according to the embodiment will be described below with the usage of channels as described below assumed for the wireless communication device in Fig. 2.

It is assumed that the wireless communication device in Fig. 2 uses an 80-MHz band with the center frequency set to 5,210 MHz. A primary channel is assumed to have a center frequency of 5,180 MHz and a channel bandwidth of 20 MHz.

As depicted in Fig. 4 and Fig. 5, the wireless communication device 1 according to the embodiment can change the bandwidth for reception of the frame FLM during reception of the frame FLM.

In accordance with a control signal CNT1 (for example, a 2-bit signal) from the control circuit 40, the frequency bandwidth for the BPF (variable band pass filter) 203 (203A and 203B) can be set to one of the following: 20 MHz, 40 MHz, 80 MHz, and 160 MHz.

In the wireless communication device 1 according to the embodiment, a 20-MHz filter bandwidth is set to be an initial bandwidth (first bandwidth) for the BPF 203 in association with a 20-MHz channel bandwidth BW1 of the primary channel. Furthermore, the oscillation frequency is set to 5,180 MHz in association with the frequency of the primary channel. The channel bandwidth for the frame and the filter bandwidth of the BPF (filter circuit) 203 have corresponding values, and thus, the channel bandwidth and the filter bandwidth are hereinafter denoted by the same reference numerals BW1 and BW2.

As depicted in (a) of Fig. 4, the wireless communication device 1 according to the embodiment receives the preamble PAM of the frame FLM with the bandwidth of the BPF 203 set to the bandwidth BW1 of 20 MHz.

The synchronization circuit 210 of the digital reception circuit 20B utilizes the legacy field located at the head of the frame to perform gain adjustment, time synchronization, and estimation of frequency offset.

The preambles PAM included in a plurality of subbands in the first frame FLM is common. Thus, even when one frame FLM includes a plurality of subbands, the channel bandwidth of one subband SBD enables the preamble PAM of the frame FLM to be received.

The analysis circuit 30 and the control circuit 40 determine whether or not to change the bandwidth of the BPF 203 during reception of the frame FLM (before reception of the user data DT) based on the bandwidth information infBW in the VHT-SIG-A V1 of the frame FLM.

For example, when the reception channel bandwidth indicated in the bandwidth information infBW is 20 MHz, the reception channel bandwidth for the user data DT (more specifically, the range from the VHT-LTF V3 to the user data DT) is the same as the channel bandwidth BW1 for reception of the preamble (more specifically, the range from the L-STF L1 to the VHT-STF V2).

In this case, the control circuit 40 continues to receive the VHT-LTF V3, the VHT-SIG-B V4, and the user data DT at a bandwidth of 20 MHz (the lower limit bandwidth according to the wireless communication standard) without changing the bandwidth of the BPF 205.

As depicted in (b) of Fig. 4, when the bandwidth information infBW indicates the second bandwidth BW2, which is larger than the lower limit channel bandwidth BW1 based on the standard, the control circuit 40 switches the bandwidth of the BPF 204.

For example, when the reception channel bandwidth indicated in the bandwidth information infBW is 80 MHz, the control circuit 40 switches the bandwidth of the BPF 203 from 20 MHz to 80 MHz before reception of the user data DT. Furthermore, the control circuit 40 switches, for example, the center frequency of the local oscillation circuit 209 from 5,180 MHz to 5,210 MHz.

For example, in connection with a change in the bandwidth of the BPF 203 (203A and 203B), the bandwidth of the DF 206 and the sampling rate of the ADC 205 (205A and 205B) may be changed.

The bandwidth and center frequency of the BPF 203 are changed by the control circuit 40 during the period of the VHT-STF V2 of the frame FLM. For example, the VHT-STF V2 substantially synchronizes with a timing entered into the analog reception circuit 20A to start changing the bandwidth and center frequency of the BPF 203. The changes in bandwidth and center frequency of the BPF 203 are executed so as to be complete before the terminal of the VHT-STF V2 is reached. For example, the period of the VHT-STF V2 is, for example, approximately 4 μsec.

When the bandwidth and the center frequency are changed, gain adjustment of the VGA 204 (204A and 204B) may be performed. When a DC offset occurs as a result of a change in the gain of the VGA 204, the DC offset is preferably cancelled. With a time for the gain adjustment and the cancellation of the DC offset also taken into account, the changes of the relevant values are desirably completed within a reception time for the VHT-STF V2.

As depicted in Fig. 5, when the bandwidth of the BPF 203 is changed during a reception period for the frame FLM, the reception period for one frame FLM includes a period tBW1 during which the frame FLM is received at the first bandwidth (subchannel bandwidth) BW1 in an initial state and a period tBW2 during which the frame FLM is received at the second bandwidth (channel bandwidth) BW2, which is larger than the first bandwidth BW1.

The power consumption of the wireless communication device set for the filter bandwidth of the first bandwidth (for example, 20 MHz) BW1 is lower than the power consumption of the wireless communication device set for the filter bandwidth (for example, 80 MHz) BW2, which is larger than the first bandwidth BW1.

Therefore, as depicted in Fig. 5, the period tBW1 during which the frame FLM is received at the bandwidth BW1 with relatively low power consumption (the period during which the preamble PAM is received) is secured in the reception period for one frame FLM. As a result, the wireless communication device 1 according to the embodiment enables a reduction in power consumption.

Furthermore, when the user data DT can be received at the same channel bandwidth BW1 as that at which the preamble PAM is received, the frequency band of the BPF 203 need not be widened. The ability to avoid the unwanted expansion of the frequency bandwidth of the BPF 203 allows the wireless communication device 1 according to the embodiment to avoid an unwanted increase in power consumption.

When the control circuit 40 switches the bandwidth of the BPF 203 and the center frequency of the local oscillation circuit 209 during reception of the frame FLM, deviations of gain, time, and frequency may occur. Thus, the deviations are preferably adjusted. The wireless communication device according to the embodiment adjusts the deviations using the set values of the bandwidth and the center frequency in a state before switching.

Thus, in the circuits in the reception circuit 20, the relevant values are synchronized in association with changes in the bandwidth and center frequency of the BPF 203.

The values of the gain, time synchronization, and frequency offset in a state after switching of the frequency bandwidth are each processed by the resynchronization processing circuit 211 in view of the information included in the preamble (for example, the bandwidth), the adjustment values for the gain, time, and frequency offset in the state before the switching of the bandwidth, the allowable ranges of values in the applied wireless communication standard, parameters that depend on the implementation (assembly) of the wireless communication device 1, and the like.

The deviation of the frequency offset is caused, for example, by a change in center frequency.

For example, the deviation of the frequency offset caused by a change in the bandwidth of the BPF 203 during reception of the frame FLM is taken into account as follows.

Based on the IEEE 802.11ac standard, for frequencies in a 5-GHz band, the range of -20 ppm to +20 ppm is set to be the allowable range for the deviation of the center frequency. With the sum of the allowable ranges on the reception and transmission sides taken into account, the allowable range of deviation of the center frequency in the 5-GHz band in the wireless communication system as a whole is between -40 ppm and +40 ppm.

For example, when a frequency for transmission and reception is 5,180 MHz (5.18 GHz), if a frequency deviation of +20ppm occurs on a receiving device and a frequency deviation of -20ppm occurs on a transmitting device, the frequency deviation in the wireless communication device 1 is +103.6 kHz - (-103.6 kHz) = 207.2 kHz.

When only the center frequency of the receiving device (and filter bandwidth) is shifted from 5,180 MHz to 5,210 MHz (5.21 GHz), the frequency deviation is +104.6 Hz - (-103.6 kHz) = 207.8 kHz.

When the center frequency of the receiving device is thus shifted from 5,180 MHz to 5,210 MHz, the frequency deviation increases by 0.6 kHz. This value corresponds to the maximum deviation amount of the frequency offset amount.

When the maximum deviation amount of the frequency offset amount is approximately 0.6 kHz, the offset amount is expected to be a value within the range in which the offset can be compensated for as a residual frequency offset in the demodulation circuit 208. Thus, an input from the frequency offset amount estimation circuit 213 to the frequency offset compensation circuit 207 maintains the same value before and after switching of the bandwidth.

However, when the deviation of the frequency offset fails to be canceled by processing as the residual frequency offset and the input value itself to the frequency offset compensation circuit 207 is desirably changed, an estimated value (an set value of the offset compensation) for the frequency offset in the state after a change in center frequency is calculated, for example, as in (Equation A).

$$\mathtt{foff2 = foff1 + (f2 - f1) \times Moff/10^6 \cdots (Equation\ A)}$$

In (Equation A), the center frequency in the state before a change in center frequency is denoted by f1, and the estimated value of the frequency offset between the transmitting device and the receiving device in the state before a change in center frequency is denoted by foff1. Furthermore, in (Equation A), the center frequency in the state after a change in center frequency is denoted by f2, and the estimated value of the frequency offset between the transmitting device and the receiving device in the state after a change in center frequency is denoted by foff2. Moff is an offset amount (unit: ppm) of the frequency in the device (for example, reception circuit) itself, for example, an offset amount between an expected frequency value (for example, a design value) and an actual measured frequency value in the reception circuit. When (Equation A) is calculated, the offset amount Moff of the frequency in the device itself is recognized in some way. For example, how many ppm a offset amount of a crystal oscillator mounted in the device has is measured in advance, the measured offset amount can be used as the value Moff in a calculation based on the (Equation A).

Based on (Equation A), the control circuit 40 and the resynchronization processing circuit 211 can correct the frequency offset associated with a change in center frequency.

As described above, in the embodiment, the processing executed by the control circuit 40 and the resynchronization processing circuit 211 enables the estimated value of the frequency offset to be calculated. The wireless communication device according to the embodiment can digitally correct the frequency offset using the estimated value obtained by the calculation process in the digital reception circuit 20B.

Furthermore, for example, the deviation of the time caused by a change in the bandwidth of the BPF 203 during reception of the frame FLM is adjusted as follows.

The time (a time component of a signal) deviation associated with a change in channel bandwidth is determined by the duration of passage of a signal (frame) through the analog reception circuit 20A and the digital reception circuit 20B. For example, a change in the signal path in the circuit resulting from switching of the circuit may lead to a change in the duration of passage of a signal to pass through the circuit,' causing a time deviation.

The time deviation in the analog reception circuit 20A results from a change in the bandwidth of the BPF 203 and causes a delay of approximately 40 nsec. However, the magnitude of a possible delay is expected to be a fixed amount that depends on the implementation of the circuit.

Furthermore, the time deviation may be caused by a change in the sampling rates of the ADCs 205A and 205B.

However, the time deviation amount is a parameter determined at the time of implementation.

The time deviation in the digital reception circuit 20B is determined by the implementation of the circuits in the digital circuit area.

As described above, the time deviation resulting from a change in bandwidth and center frequency is determined by the implementation. In this case, a position of time synchronization in the digital reception circuit 20B may be adjusted by applying an offset with an amount that depends on the implementation to value (time) in the state before switching of the bandwidth.

Furthermore, the gain resulting from a change in the bandwidth of the BPF 203 during reception of the frame is adjusted, for example, as follows.

The deviation of the gain is caused, for example, by an increase or a decrease in reception power associated with a change in reception bandwidth.

For example, when the bandwidth of the BPFs 203A and 203B is changed from 20 MHz to 80 MHz, if only a desired signal wave is taken into account, the gain at a bandwidth of 80 MHz may be approximately four times as high as the gain at a bandwidth of 20 MHz.

In this case, even when the bandwidth of the BPF 203 is changed, for the gains of the LNA 201 and the VGAs 204A and 204B, the gains adjusted upon reception of the legacy field located at the head of the frame and having a bandwidth of 20 MHz may be maintained or adjusted again. Furthermore, when a signal on an adjacent channel is detected as a result of an expanded bandwidth or an interfering wave is present before switching of the bandwidth and the center frequency, an approximately quadruple signal amplitude may not be appropriate. Thus, the gain is preferably adjusted.

Gain adjustment for the VGAs 204A and 204B may cause the VGAs 204A and 204B to create a DC offset. Thus, the resultant DC offset is preferably cancelled. Time is spent from the gain adjustment until convergence of the DC offset, and thus, desirably, the number of gain adjustments is reduced as much as possible to converge the DC offset in a short time.

The wireless communication device according to the embodiment enables a reduction in the number of gain adjustments by setting the gain in the state before switching of the bandwidth (or a gain approximately four times as high as the gain in the state before switching) equal to the gain at the time of start of the gain adjustment. Given a difference between the magnitude of the signal in the state before switching of the bandwidth and the magnitude of the signal in the state after switching of the bandwidth of, for example, approximately 6 dB, the wireless communication device according to the embodiment enables the gain to be adjusted using one control operation of the AGC 209 by starting the adjustment with the gain in the state before switching of the bandwidth (the gain with an initial value).

Furthermore, when it is previously known that the gain varies as a result of a change in center frequency because the BPFs 203A and 203B have a certain frequency characteristic due to an implementation condition for the wireless communication device, the gain may be adjusted with the variation in gain taken into account.

As described above, in the embodiment, when the frequency bandwidth for reception is changed during reception of the frame FLM, the deviations of the frequency offset (the offset estimated value or the set value of the offset compensation), the time, and the gain are adjusted.

Therefore, in the wireless communication device 1 according to the embodiment, even when the bandwidth and center frequency of the filter circuit (BPF) 203 are changed during reception of the frame FLM, the reliability of the information in the received frame FLM is ensured.

The synchronization circuit 210 and the resynchronization processing circuit 211 may be circuits (or firmware/software) incorporated in the control circuit 40.

As depicted in Fig. 5, after reception of one frame FLM is complete, the control circuit 40 recovers the frequency bandwidth (and center frequency) of the BPF 203 to the first frequency bandwidth (the frequency band for reception of the preamble) BW1 in the initial state. The wireless communication device 1 according to the embodiment waits at a frequency band of 20 MHz during a period tWT until the next frame FLM is supplied. Thus, the wireless communication device 1 according to the embodiment enables a reduction in power consumption during the wait period until the transmission and reception of the subsequent frame are started.

The wireless communication device 1 according to the embodiment sets the reception channel bandwidth BW1 of the BPF 203 in association with the channel bandwidth BW1 of the subband SBD.

Then, the wireless communication device 1 according to the embodiment uses the reception frequency bandwidth BW1 to start receiving the frame FLM. The wireless communication device 1 according to the embodiment determines whether to change the bandwidth of the BPF 203 during reception of the frame FLM, based on the information infBW on the channel bandwidth included in the preamble PAM.

To change the reception channel bandwidth for reception of the user data DT succeeding the preamble PAM, the wireless communication device 1 according to the embodiment changes the bandwidth of the BPF 203, and after the change in bandwidth, receives the user data DT using the second bandwidth BW2, which is larger than the first bandwidth BW1.

The power consumption of the wireless communication device depends on the magnitude of the channel bandwidth (filter bandwidth) of the frame FLM. That is, in the wireless communication device, the power consumption of the reception circuit increases with the spread of the frequency bandwidth for reception of the data (preamble and user data).

In contrast, the use of the procedure of the wireless communication device according to the embodiment allows the wireless communication device 1 according to the embodiment to set the reception period for a signal with a relatively narrow bandwidth (for example, the first frequency bandwidth) in the reception period for the frame or the wait period for the frame.

Thus, compared to a case where the entire frame is received over a relatively wide bandwidth, the case of the wireless communication device 1 according to the embodiment enables a reduction in power consumption.

As described above, the wireless communication device according to the embodiment enables a reduction in power consumption.

(b) Operation Example

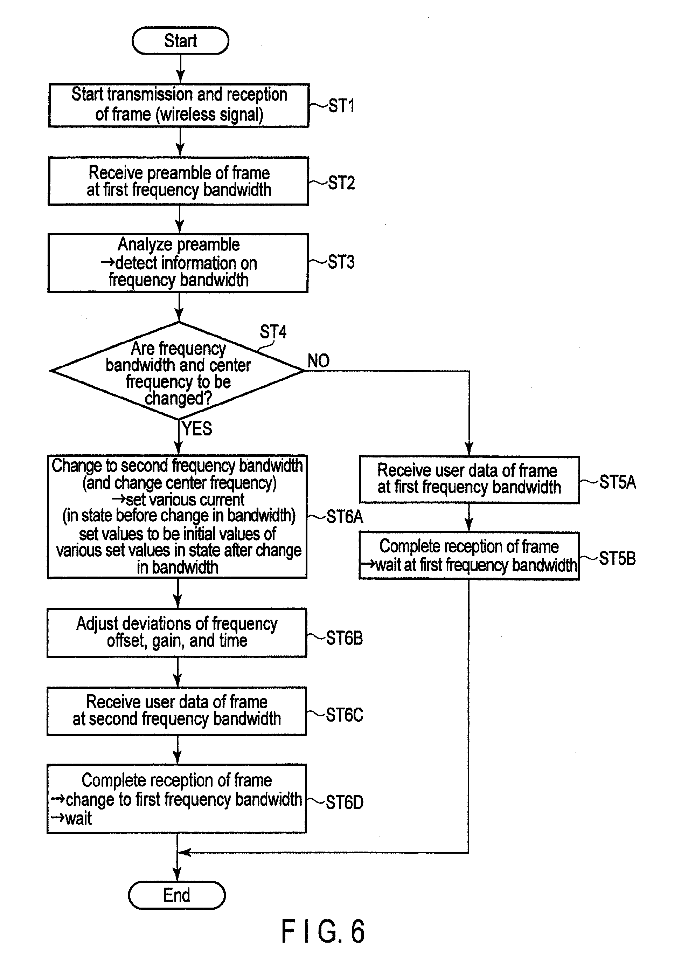

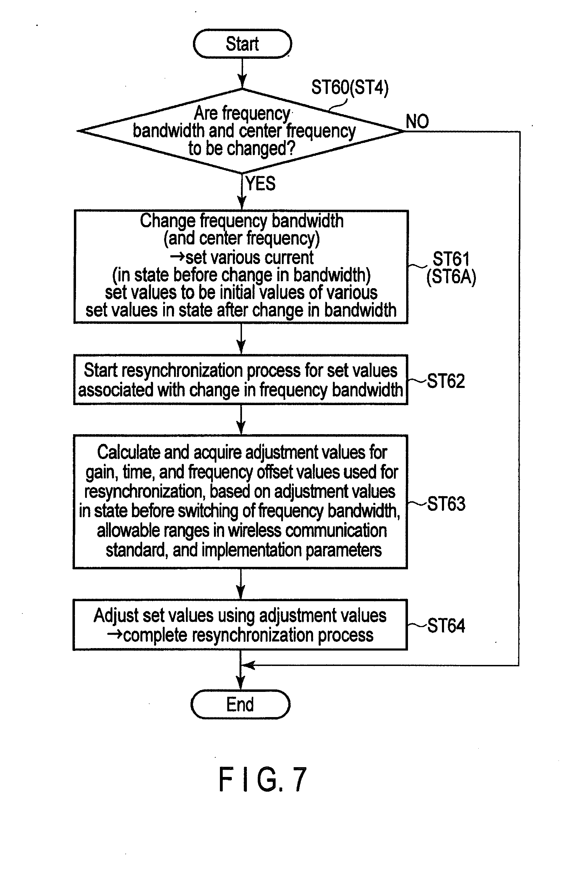

With reference to Fig. 6 and Fig. 7, an example of operation of the wireless communication device according to the embodiment will be described. The example of operation of the wireless communication device 1 according to the embodiment will be described, referring to Figs. 1 to 5 as appropriate.

Fig. 6 is a flowchart illustrating a control method for the wireless communication device 1 according to the embodiment.

As depicted in Fig. 6, transmission and reception of the wireless signal WS are started between the transmitting device and the receiving device (step ST1).

For example, as depicted in Fig. 5, before reception of the wireless signal WS, the BPFs 203A and 203B and local oscillation circuit 209 in the reception circuit 20 in the wireless communication device 1 wait with the reception frequency bandwidth set to 20 MHz and the center frequency set to 5,180 MHz, based on the primary channel.

In the embodiment, the wireless signal WS (frame FLM) based on the wireless communication standard set between the devices is transferred from the transmitting wireless communication station 2 to the receiving wireless communication device 1.

The frame FLM is input to the analog reception circuit 20A and the digital reception circuit 20B via the antenna section (for example, the MIMO antenna section) so that the preamble PAM is first input and followed by the user data DT.

The preamble PAM of the frame FLM is received by the analog reception circuit 20A and the digital reception circuit 20B via the antenna section 10 (step ST2).

The preamble PAM is amplified by the LNA 201 and subjected to a frequency conversion by the mixer circuit 202.

The preamble PAM subjected to a frequency conversion is filtered by the BPFs 203A and 203B at the first reception frequency bandwidth BW1, corresponding to the channel bandwidth of one subband SBD in the frame FLM. Before reception of the preamble PAM of the frame FLM, the bandwidth BW1 of the BPFs 203A and 203B is set to 20 MHz (between -10 MHz and +10 MHz with reference to the center frequency).

The filtered preamble PAM is amplified by the VGA 204. The amplified preamble PAM is converted into a digital signal by the ADC 205 at a rate set in the ADC 205.

The DF 206 executes a digital filtering process on the preamble PAM converted into the digital signal.

Gain adjustment, time synchronization, and estimation of the frequency offset are performed using outputs from the ADCs 205A and 205B and the preamble PAM output by the DF 206. Thus, the synchronization process at the head of the frame is complete.

For the output from the DF 206, the frequency offset is compensated for (removed) by the frequency offset compensation circuit 207. The signal with the frequency offset compensated for is demodulated by the demodulation circuit 208. The demodulated signal (preamble PAM) is supplied to the analysis circuit 30.

The information in the demodulated preamble PAM is analyzed by the analysis circuit 30 (step ST3).

When the standard for the frame FLM is IEEE801.11ac, the preamble PAM includes the VHT-SIG-A V1. The information (2-bit data) infBW indicative of the channel bandwidth in the VHT-SIG-A V1 is analyzed by the analysis circuit 30. The analyzed information infBW allows detection of information on the filter bandwidth (and information on the center frequency) used for reception of the user data DT succeeding the preamble PAM in the frame FLM.

Based on the result of analysis of the VHT-SIG-A V1 performed by the analysis circuit 30, the control circuit 40 determines whether or not to change the reception frequency bandwidth and center frequency of the BPF 203 (step ST4).

When the channel bandwidth for reception of the user data DT is the same as the channel bandwidth (in this case, 20 MHz) of the subband SBD (preamble PAM), the setting of the bandwidth of the BPF 203 is unchanged and maintained at the bandwidth with the initial value. The VHT-STF V2, VHT-LTF V3, VHT-SIG-B V4, and the user data DT are sequentially received using the frequency bandwidth BW1, which is the same as the bandwidth used for reception of the legacy field LF (step ST5A).

The VHT field and the user data DT pass through the BPF 203 with a bandwidth of 20 MHz and are subjected to various types of signal processing such as amplification of the signal, an AD conversion, a digital filtering process, and a demodulation process.

Thus, the reception of the frame FLM is complete without a change in frequency bandwidth during the reception of the frame FLM (step ST5B).

In step ST4, when the bandwidth information infBW indicates that the channel bandwidth of the user data DT is different from the channel bandwidth BW1 of the preamble PAM (is larger than 20 MHz), the bandwidth of the BPF 203 is changed to the bandwidth indicated by the bandwidth information infBW in accordance with the control signal CNT1 from the control circuit 40 (step ST6A). Furthermore, in accordance with a change in bandwidth, the center frequency of the local oscillation circuit 209 is also changed.

When the frequency bandwidth and the center frequency are changed, the current values (in the state before a change in frequency bandwidth) of various set values such as the frequency offset, the gain, and the time are set as the set values (initial values) of the frequency offset, gain, and time in the state after the changes in frequency bandwidth and center frequency.

For example, the bandwidth of the BPF 203 is changed from the bandwidth BW1 of 20 MHz to the bandwidth BW2 of 80 MHz (between -40 MHz and +40 MHz with reference to the center frequency). In connection with this, the center frequency is changed, for example, from 5,180 MHz to 5,210 MHz.

In connection with changes in the bandwidth of the BPFs 203A and 203B and the center frequency of the local oscillation circuit 209, the sampling rates of the ADCs 205A and 205B and the bandwidth of the DF 206 may be changed.

The changes in the bandwidth and center frequency of the BPF 203 (and accompanied re-synchronization adjustment) are executed during the reception period (4 μsec) for the VHT-STF V2 in the preamble PAM. Then, at the timing of completion of (or during) reception of the VHT-STF V2, the bandwidth of the BPF 203 is switched from the bandwidth BW1 for reception of the preamble PAM to the bandwidth BW2 for reception of the user data DT.

In accordance with the bandwidth information infBW, the bandwidth of the BPF 203 may be changed to a bandwidth BP3 of 40 MHz (between -20 MHz and +20 MHz with reference to the center frequency) or a bandwidth of 160 MHz (between -80 MHz and +80 MHz with reference to the center frequency).

For example, the set values for the circuits in the reception circuit 20 are adjusted in association with a change in frequency bandwidth of the BPF 203 (step ST6B).

Fig. 7 is a flowchart used to adjust the set values for the reception circuit.

As described above in step ST4, the analysis circuit 30 and the control circuit 40 analyze the information in the preamble PAM to determine whether or not to change the frequency bandwidth and center frequency of the BPF 203 in the reception circuit 20 (step ST60).

As described above in step ST6A, when the frequency bandwidth (and center frequency) of the BPF 203 is changed, for the set values such as the frequency offset, the gain, and the time, the set values (current values) in the state before the change in frequency bandwidth are set as the initial values resulting from the change (step ST61).

The deviations of the set values caused by a change in bandwidth may occur in the following situation.

The deviation of the frequency offset may be caused, for example, by a change in center frequency. The deviation of the gain may be caused, for example, by an increase or a decrease in reception power associated with a change in reception bandwidth or by detection of a signal on the adjacent channel. The time deviation may occur when the duration of passage of a signal through the circuit (signal path) is changed by switching of the circuit. Furthermore, a DC offset may result from adjustment of the gain deviation.

A resynchronization process is executed in order to correct the deviations of the set values (parameters) as described above.

When the frequency bandwidth and the center frequency are changed, the resynchronization process is started in order to adjust the deviations of the frequency offset, gain, and time associated with changes in frequency bandwidth and center frequency (step ST62). When the frequency bandwidth and center frequency of the BPF 203 are not changed, the resynchronization process associated with a change in bandwidth is not executed.

The adjustment values for resynchronization of the set values are calculated and acquired (step ST63). The set values can be adjusted by the synchronization circuit 210 and the resynchronization processing circuit 211 in the digital reception circuit 20B under the control of the analysis circuit 30 and the control circuit 40.

The adjustment values for the gain, time, and frequency offset in the state after a change in bandwidth (after resynchronization) are determined in view of the information included in the preamble (for example, the bandwidth), the adjustment values for the gain, time, and frequency offset in the state before switching of the bandwidth, the allowable ranges of the values in the applied wireless communication standard, the parameters that depend on the implementation of the wireless communication device 1, and the like.

As described above, the deviation of the frequency offset caused by switching of the center frequency is calculated using the value of the frequency offset estimated before switching of the center frequency, the values of the center frequency in the state before and after switching of the bandwidth, and the allowable values based on IEEE 802.11ac, etc. For example, the adjustment value for the deviation of the frequency component of the reception signal is determined based on the model formula in (Equation A).

The deviation of the time (the time component of the signal) caused by switching of the bandwidth of the filter is adjusted depending on the implementation of the device.

Furthermore, the gain deviation caused by switching of the bandwidth and center frequency of the filter is adjusted by the AGC 209 by controlling the VGA 205 based on a control signal from the synchronization circuit (or the control circuit). When the gain is adjusted, the value of the gain at the start of the gain adjustment is set in view of the gain value in the state before changes in bandwidth and center frequency. For example, a value four times as large as the gain value in the state before switching of the bandwidth and the center frequency is used as a starting value. However, when the gain deviation is found to be insignificant in advance, the adjustment of the gain by the AGC 209 and the VGA 205 may not be performed.

Thus, the set values are adjusted using the calculated and acquired adjustment values. This completes the resynchronization process on the set values for the reception circuit 20 associated with changes in the bandwidth of the filter and in the center frequency of the local oscillation circuit (step ST64).

As described above, the deviations of the frequency offset, time, and gain, etc. are adjusted in association with changes in the frequency bandwidths BW1 and BW2 of the BPF 203 during reception of the frame FLM and a change in center frequency associated with the changes in frequency bandwidths BW1 and BW2. Thus, even when the reception frequency bandwidth of the device 1 is changed during reception of the frame FLM, the received wireless signal WS is expected not to be substantially degraded.

After the synchronization process/correction process depicted in Fig. 7 is executed, the VHT-LTF V3, the VHT-SIG-B V4, and the user data DT are received at the resultant bandwidth BW2 (step ST6C).

Various types of processing such as amplification of the signal and a digital conversion process are executed on the user data DT received at the second bandwidth BW2 using the frequency, gain, and time adjusted in association with the second bandwidth BW2.

The received user data DT is demodulated by the demodulation circuit 208, and the demodulated user data DT is output to a higher layer of the interface. Thus, reception of the frame FLM is complete (step ST6D).

After reception of the frame FLM is complete, the bandwidth and center frequency of the BPF 203 are returned from the second bandwidth (in this case, 80 MHz) BW2 to the first bandwidth (in this case, 20 MHz) BW1 by the control circuit 40.

The wireless communication device 1 according to the embodiment waits, at the first bandwidth BW1, which is smaller than the second bandwidth BW2, for transfer of the next frame to be started.

As described above, in the control method for the wireless communication device according to the embodiment, the operation of the wireless communication device 1 is controlled so that, upon reception of a frame FLM including a plurality of subbands (subchannels) SBD based on a certain communication standard, the preamble PAM area (field) including information common to the plurality of subbands SBD is received by the BPF 203 for which the filter bandwidth and the center frequency are set to magnitudes corresponding to the bandwidth (subchannel bandwidth) BW1.

Therefore, in the control method for the wireless communication device according to the embodiment, the operation of the wireless communication device 1 is controlled, and based on the result of the analysis of the preamble PAM, the magnitude and center frequency of the reception frequency bandwidth of the BPF 203 are changed during reception of the frame FLM so that the preamble PAM area and user data DT, which may include information varying among the subbands SBD, are received using the bandwidth BW2, which is larger than the bandwidth BW1 of the subbands SBD.

Thus, the control method for the wireless communication device according to the embodiment enables a reduction in the power consumption of the wireless communication device.

(c) Modifications

<Wireless Communication Standard>

The wireless communication standard used for the wireless communication device according to the embodiment is not limited to IEEE 802.11ac.

The wireless communication device 1 according to the embodiment is applicable to a wireless communication device compliant with IEEE 802.11n.

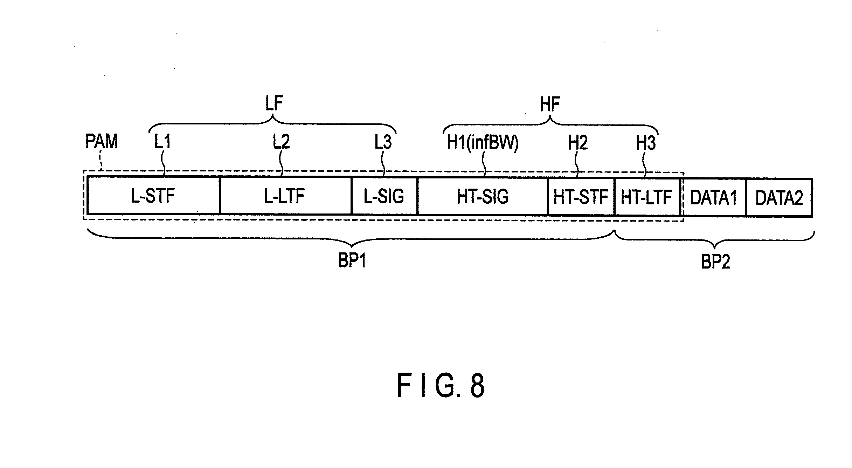

Fig. 8 schematically depicts the format of a frame compliant with IEEE 802.11n.

As depicted in Fig. 8, a frame FLMn compliant with IEEE 802.11n includes a preamble PAMn and user data DT. The preamble PAMn includes a legacy field LF and an HT field HF.

In the IEEE 802.11n standard, an HT-SIG H1 includes bandwidth information infBW used for reception of the user data DT. A reception channel bandwidth used for the IEEE 802.11n standard is, for example, 20 MHz or 40 MHz.

The analysis circuit 30 and the control circuit 40 analyzes the fields in the preamble PAMn to detect the bandwidth information infBW for reception of the user data DT.

During reception of the frame FLMn, the analysis circuit 30 and the control circuit 40 set the filter bandwidth of the BPF 203 and the center frequency of the local oscillation circuit 209 in the bandwidth corresponding to the bandwidth information infBW in the HT-SIG H1. When the filter bandwidth of the BPF 203 and the center frequency of the local oscillation circuit 209 are switched during reception of the frame FLM, the resynchronization processing circuit 211 adjusts the deviation of frequency offset, the deviation of the gain, and the deviation of the time synchronization, each of which results from signal processing, in accordance with the changes in filter bandwidth and center frequency.

The wireless communication device 1 according to the embodiment is applicable to a wireless communication device compliant with the WiMAX standard.

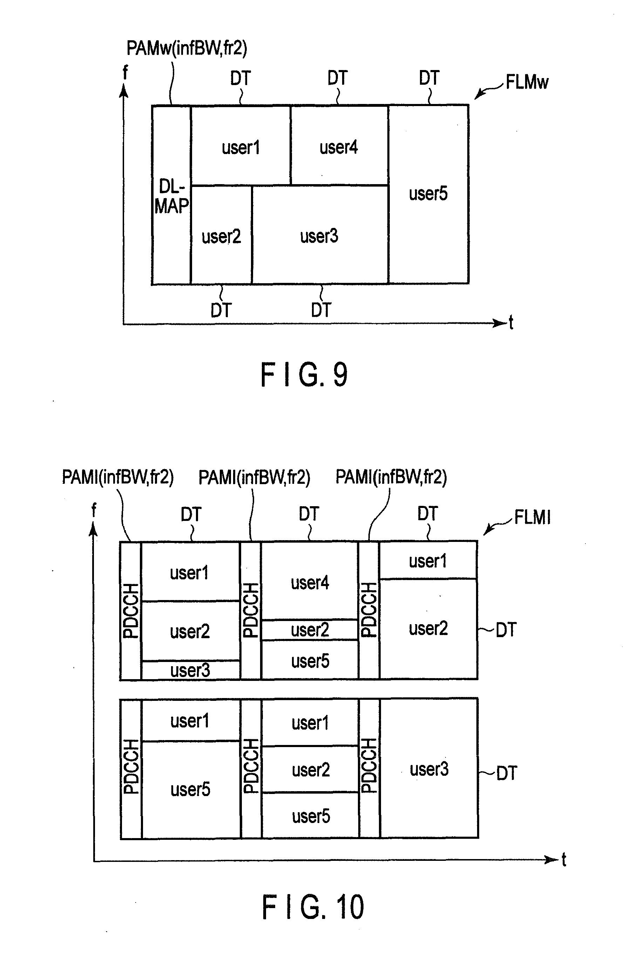

Fig. 9 schematically depicts the format of a frame compliant with the WiMAX standard.

As depicted in Fig. 9, a frame FLMw compliant with the WiMAX standard includes DL-MAP (downlink wireless resource assignment information) PAMw, and a plurality of user data (downlink burst) DT.

In the WiMAX standard (for example, the mobile WiMAX standard), the channel bandwidth is set, for example, to any one of 5 MHz, 7 MHz, 8. 75 MHz, and 10 MHz in accordance with the user data DT. In the WiMAX standard, even for the user data DT in one frame FLMw, the channel bandwidth may vary among the user data DT.

In the WiMAX standard, a DL-MAP PAMw includes control information used for reception of data. The DL-MAP PAMw includes channel bandwidth information infBW corresponding to each user data DT and frequency position information (center frequency fr2) in the user data.

The analysis circuit 30 analyzes the DL-MAP PAMw to detect information on the bandwidth and frequency position in the user data DT received by the device 1.

Based on the result of analysis of the DL-MAP PAMw, the wireless communication device 1 according to the embodiment can change, during reception of the frame FLM, the frequency bandwidth and center frequency of the BPF 203 from a bandwidth BW1 and a center frequency fr1 for reception of the DL-MAP PAMw to a bandwidth BW2 and a center frequency fr2 for reception of the user data DT.

The wireless communication device 1 according to the embodiment is applicable to a wireless communication device compliant with the LTE standard (or the LTE-A standard).

Fig. 10 schematically depicts the format of a frame compliant with the LTE/LTE-A standard.

As depicted in Fig. 10, a frame FLM1 compliant with the LTE/LTE-A standard includes PDCCH (Physical Downlink Control CHannel) PAM1 and a plurality of user data (subcarriers) DT.

In the LTE/LTE-A standard, the channel bandwidth is set, for example, to any one of 1.4 MHz, 3 MHz, 5 MHz, 14 MHz, and 20 MHz in accordance with the user data DT. In the LTE/LTE-A standard, even for the user data DT in one frame FLM1, the channel bandwidth may vary among the user data DT.

The PDCCH PAM1 includes control information for reception of the frame. The PDCCH PAM1 includes channel bandwidth information infBW and frequency position information (center frequency fr2).

The analysis circuit 30 analyzes the PDCCH PAM1 to detect information infBW on the bandwidth and frequency position in the user data DT.

Based on the result of analysis of the PDCCH PAM1, the wireless communication device 1 according to the embodiment can change, during reception of the frame FLM, from a bandwidth BW1 and a center frequency (fr1) for reception of the PDCCH PAM1 to a bandwidth BW2 and a center frequency (fr2) of the BPF 203 corresponding to the user data to be received.

As described above, the embodiment is applicable to devices that use the wireless communication standards other than the IEEE 802.11ac standard.

Furthermore, depending on a wireless communication standard applied to the wireless communication device according to the embodiment, a channel bandwidth of the data area (preamble) including control information of the flame may be wider than a channel bandwidth of the user data. The wireless communication device can receive the preamble including control information of the frame with a wide reception bandwidth and switch a reception bandwidth for reception of the user data to a bandwidth which is narrower than the reception bandwidth for the reception of the preamble based on the control information before reception of the user data.

<Circuit Configuration>

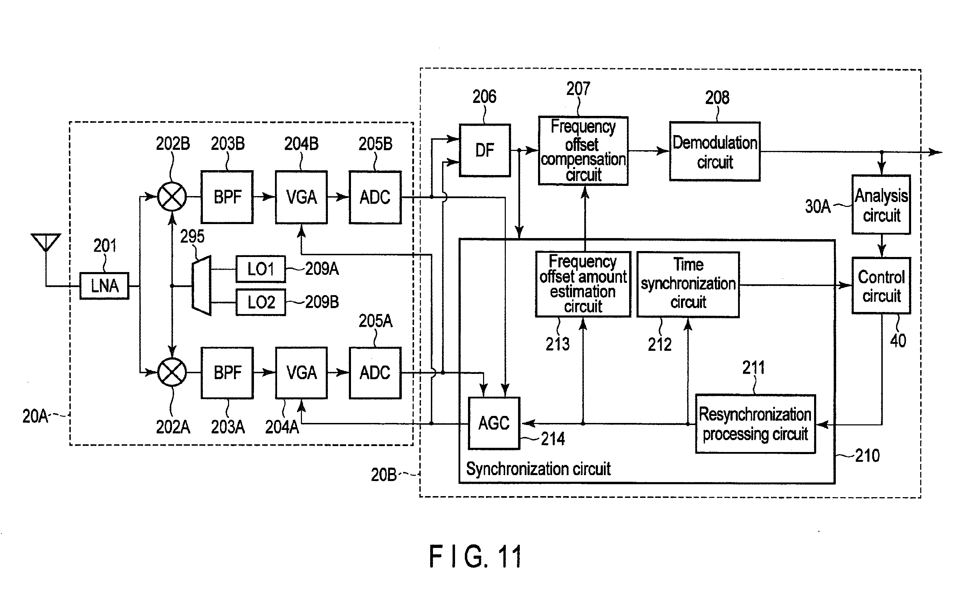

The wireless communication device according to the embodiment is not limited to the circuit configuration depicted in Fig. 2. The wireless communication device according to the embodiment has a circuit configuration depicted in Figs. 11 to 13.

Such a wireless communication device as depicted in Fig. 11 may be used to shorten a time to switch the center frequency.

The device in Fig. 11 includes two local oscillation circuits 209A and 209B. The two local oscillation circuits 209A and 209B can generate different frequency signals. A selector 295 switches connections between mixer circuit 202A and 202B and the local oscillation circuits 209A and 209B. Depending on the reception bandwidth of the wireless communication device, one of the two local oscillation circuits 209A and 209B is connected to the mixer circuits 202A and 202B by the selector 295.

In the wireless communication device in Fig. 11, frequency signals in the state before and after switching of the center frequency are pre-generated using the two local oscillation circuits 209A and 209B. Thus, the frequency can be changed by the selector 295 simply by switching.

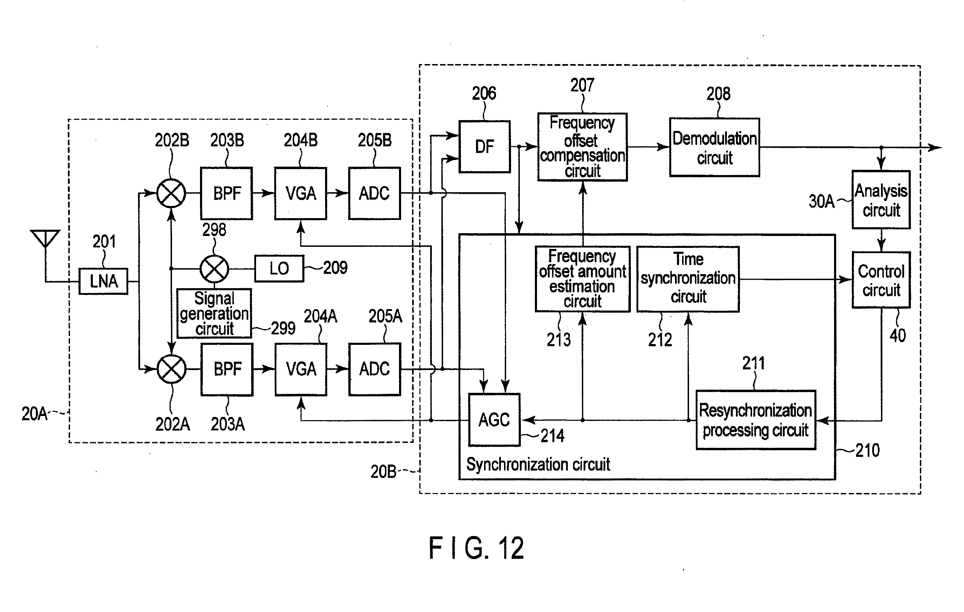

Such a wireless communication device as depicted in Fig. 12 may be used as the wireless communication device according to the embodiment. In the wireless communication device in Fig. 12, a mixer circuit 298 is provided between a local oscillation circuit 209 and receiving mixer circuits 202A and 202B. The mixer circuit 298 is supplied with an output from a signal generation circuit 299 in conjunction with an output from the local oscillation circuit 209.

The wireless communication device in Fig. 12 can switch the center frequency, for example, from 5,180 MHz to 5,210 MHz. An output from the local oscillation circuit 209 in the state before switching of the bandwidth is set to 5,180 MHz, and a DC signal (0 MHz) is output by the signal generation circuit 299. Thus, the mixer circuit 298 can supply the receiving mixer circuits 202A and 202B with a 5,180-MHz oscillation signal.

On the other hand, after switching of the bandwidth, the output from the local oscillator 209 is set to 5,180 MHz, and the output from the signal generation circuit 299 is set to be a 30-MHz oscillation signal. Therefore, the mixer circuit 298, used to generate a local oscillation frequency (center frequency), can supply the receiving mixer circuits 202A and 202B with a 5,210-MHz oscillation signal using the output from the local oscillator 209 and the output from the signal generation circuit 299.

Thus, the wireless communication device in Fig. 12 need not switch frequencies in the 5-GHz band and can thus switch the bandwidth in a short time.

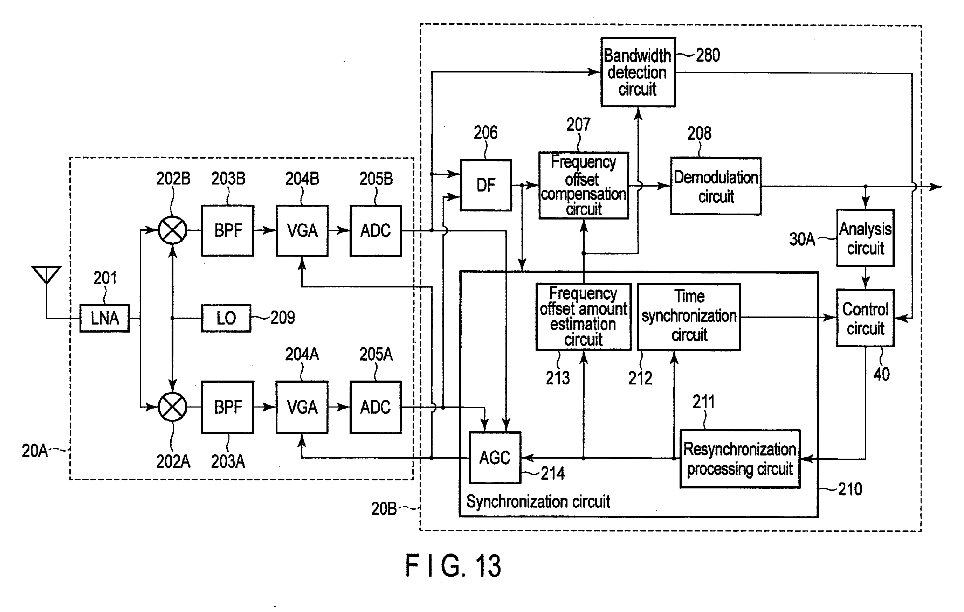

Furthermore, the wireless communication device may include a circuit that quickly detects whether or not the bandwidth has been switched, as in a wireless communication device in Fig. 13. The bandwidth information infBW in the frame FLM results from analysis of field information involved in the execution of a demodulation process. However, since the normal demodulation process is executed to analyze such field information, the amount of time until successful detection of whether or not the bandwidth has been switched may be increased.

The wireless communication device in Fig. 13 includes a circuit that detects the bandwidth (hereinafter referred to as a bandwidth detection circuit) 280. The wireless communication device in Fig. 13 can avoid taking a long time to detect whether or not the bandwidth has been switched.

For example, in a normal demodulation process in a wireless communication device configured based on the 802.11ac standard, signals are demodulated by a Fourier transform in order to retrieve each subcarrier. However, the processing time of the Fourier transform and the like may delay the output of a detection result which allows the bandwidth to be switched.

The wireless communication device in Fig. 13 includes a bandwidth detection circuit 280 in order to avoid the delay of output of the detection result. The bandwidth detection circuit 280 is, for example, a multiplier that uses sine waves. The bandwidth detection circuit 280 retrieves only the subcarriers including the bandwidth information infBW. Thus, the wireless communication device in Fig. 13 can quickly detect whether or not the bandwidth has been switched.

(3) Others

The wireless communication device 1 according to the embodiment may be a smartphone, a portable game machine, a device equipped with a wireless communication memory card, or a tablet PC connected to a mobile router.

The wireless communication device 1 according to the embodiment may be a base station (access point).

The wireless communication device 1 according to the embodiment and the control method therefore may be applied to a wireless communication system in which a plurality of wireless communication devices communicate wirelessly with one another without a mediating base station.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A wireless communication device comprising:

a reception circuit receiving a data frame including first and second data units, the first and second data units each including a first data area and a second data area following the first data area, the first data area including channel bandwidth information of the data frame; and
a control circuit controlling the reception circuit based on the channel bandwidth information,
wherein, the reception circuit receives the first data area of the first data unit with a first frequency bandwidth corresponding to a first channel bandwidth for the first data unit,
when the channel bandwidth information is indicative of a second channel bandwidth different from the first channel bandwidth, the control circuit switches, before the reception circuit receives the second data, a frequency bandwidth of the reception circuit to a second frequency bandwidth corresponding to the second channel bandwidth.

2. The device according to claim 1, wherein, in conjunction with switching of the frequency bandwidth of the reception circuit,
the control circuit switches a center frequency of the reception circuit from a first center frequency to a second center frequency different from the first center frequency.

3. The device according to claim 2, wherein an estimated value of a frequency offset in the second center frequency is generated based on

$$foff2 = foff1 + (f2 - f1) \times Moff/10^6$$

where f1 is the first center frequency, f2 is the second center frequency, foff1 is an estimated value for a frequency offset of the first center frequency between the transmitting device and the receiving device before switching of the center frequency, foff2 is an estimated value for the frequency offset of the second center frequency between the transmitting device and the receiving device after switching of the center frequency, Moff (unit : ppm) is a value of the frequency offset between an expected value and an actual value in the reception circuit.

4. The device according to claim 1, wherein,
when the frequency bandwidth is switched to the second frequency bandwidth,
the control circuit adjusts at least one of set values for a frequency offset compensation, a gain and a time of the reception in the second frequency bandwidth based on set values for a frequency offset compensation, a gain and a time before switching of the frequency bandwidth.

5. The device according to claim 4, wherein
the control circuit increases the value of the gain before switching of the frequency bandwidth of the reception circuit to adjust the set value of the gain.

6. The device according to claim 4, wherein
the control circuit uses an value corresponding to a change of a signal path of the reception circuit to adjust the set value for the time.

7. The device according to claim 1, wherein
the control circuit switches the frequency bandwidth of the reception circuit from the second frequency bandwidth to the first bandwidth after a reception of the data frame is completed.

8. The device according to claim 1, wherein
when the channel bandwidth information is indicative of the first channel bandwidth,
the control circuit maintains the frequency bandwidth of the reception circuit to the first frequency bandwidth, and
the reception circuit receives the second data area of the first data unit with the first frequency bandwidth.

9. The device according to claim 1, wherein
the reception circuit includes:

a first circuit which outputs a first oscillation signal corresponding to a first center frequency of the reception circuit;

a second circuit which outputs a second oscillation signal corresponding to a second center frequency of the reception circuit; and

a selection circuit which selects one of the first and second oscillation signals,

the selection circuit selects the first oscillation signal before switching of the frequency bandwidth of the reception circuit,

the selection circuit selects the second oscillation signal after the switching of the frequency bandwidth of the reception circuit,

the reception circuit receives the data frame by using a selected oscillation signal among the first and second oscillation signals.

10. The device according to claim 1, wherein
the reception circuit includes:

a first circuit which outputs a first signal having a first frequency;

a second circuit which outputs a second signal or a third signal; and

a third circuit which generates a first oscillation signal corresponding to a first center frequency of the reception circuit based on the first and second signals before switching of the frequency bandwidth of the reception circuit, and generates a second oscillation signal corresponding to a second center frequency of the reception circuit based on the first and third signals after the switching of the frequency bandwidth of the reception circuit,

the reception circuit receives the data frame by using a generated oscillation signal among the first and second oscillation signals.

11. The device according claim 1, wherein
the reception circuit includes a first circuit selectivity which retrieves the channel bandwidth information included in the first data area.

12. The device according to claim 1, wherein
the data frame is based on IEEE 802.11ac, and
the control circuit switches the frequency bandwidth of the reception circuit during a reception period for a VHT-STF in the data frame based on bandwidth information in a VHT-SIG-A in the data frame.

13. A wireless communication device comprising:

a reception circuit receiving a data frame including first and second data units, the first and second data units each including a first data area and a second data area following the first data area; and

a control circuit controlling the reception circuit based on an analysis result of the first data area,

wherein, the reception circuit receives the first data area with a first frequency bandwidth corresponding to a first channel bandwidth for the first data unit,

the control circuit switches, before the reception circuit receives the second data, a frequency bandwidth of the reception circuit to a second frequency bandwidth different from the first frequency bandwidth.

14. The device according to claim 13, wherein,
in conjunction with switching of the frequency bandwidth of the reception circuit,
the control circuit switches a center frequency of the reception circuit from a first center frequency to a second center frequency different from the first center frequency.

15. A method of controlling a wireless communication device,
receiving, by using a reception circuit, the data frame including first and second data units with a first frequency bandwidth corresponding to a first channel bandwidth of the first data unit, each of the first and data units including a first data area and a second data area following the first data area;
analyzing the first data area; and
switching the frequency bandwidth of the reception circuit to a second frequency bandwidth different from the first frequency bandwidth based on a result of the analyzing of the first data area before a reception of the second data area.

F I G. 1

EP 2 996 408 A1

F I G. 2

FIG.3

F I G. 4

EP 2 996 408 A1

FIG.5

```
                    ┌─────────────┐
                    │    Start    │
                    └──────┬──────┘
                           │
          ┌────────────────▼────────────────┐
          │  Start transmission and reception │──ST1
          │     of frame (wireless signal)    │
          └────────────────┬────────────────┘
                           │
          ┌────────────────▼────────────────┐
          │     Receive preamble of frame    │──ST2
          │     at first frequency bandwidth │
          └────────────────┬────────────────┘
                           │
          ┌────────────────▼────────────────┐
          │        Analyze preamble          │──ST3
          │     →detect information on        │
          │       frequency bandwidth        │
          └────────────────┬────────────────┘
```

ST4

Are frequency bandwidth and center frequency to be changed?

NO

YES

Change to second frequency bandwidth (and change center frequency) →set various current (in state before change in bandwidth) set values to be initial values of various set values in state after change in bandwidth ──ST6A

Receive user data of frame at first frequency bandwidth ──ST5A

Complete reception of frame →wait at first frequency bandwidth ──ST5B

Adjust deviations of frequency offset, gain, and time ──ST6B

Receive user data of frame at second frequency bandwidth ──ST6C

Complete reception of frame →change to first frequency bandwidth →wait ──ST6D

End

F I G. 6

```
           ┌──────────────┐
           │    Start     │
           └──────┬───────┘
                  │           ST60(ST4)
                  ▼
           ╱────────────────╲
          ╱   Are frequency   ╲        NO
         ╱ bandwidth and center ╲──────────────┐
         ╲ frequency to be      ╱              │
          ╲    changed?        ╱               │
           ╲────────┬─────────╱                │
                    │YES                        │
                    ▼                           │
   ┌────────────────────────────────────┐      │
   │     Change frequency bandwidth      │      │
   │      (and center frequency)         │      │
   │        →set various current         │  ST61│
   │   (in state before change in        │  (ST6A)
   │    bandwidth) set values to be       │      │
   │   initial values of various         │      │
   │  set values in state after change   │      │
   │          in bandwidth               │      │
   └────────────────┬───────────────────┘      │
                    ▼                           │
   ┌────────────────────────────────────┐      │
   │ Start resynchronization process for │      │
   │ set values associated with change   │  ST62│
   │     in frequency bandwidth          │      │
   └────────────────┬───────────────────┘      │
                    ▼                           │
   ┌────────────────────────────────────┐      │
   │ Calculate and acquire adjustment    │      │
   │ values for gain, time, and          │      │
   │ frequency offset values used for    │      │
   │ resynchronization, based on         │  ST63│
   │ adjustment values in state before   │      │
   │ switching of frequency bandwidth,   │      │
   │ allowable ranges in wireless        │      │
   │ communication standard, and         │      │
   │ implementation parameters           │      │
   └────────────────┬───────────────────┘      │
                    ▼                           │
   ┌────────────────────────────────────┐      │
   │ Adjust set values using adjustment  │  ST64│
   │  values →complete resynchronization │      │
   │            process                  │      │
   └────────────────┬───────────────────┘      │
                    ▼◄──────────────────────────┘
           ┌──────────────┐
           │     End      │
           └──────────────┘
```

F I G. 7

PAM  ·········· LF ··········  ·········· HF ··········

L1   L2   L3   H1(infBW)   H2   H3

| L-STF | L-LTF | L-SIG | HT-SIG | HT-STF | HT-LTF | DATA1 | DATA2 |

BP1                                                      BP2

F I G. 8

F I G. 9

F I G. 10

F I G. 11

EP 2 996 408 A1

F I G. 12

F I G. 13

EP 2 996 408 A1

Europäisches
Patentamt
European
Patent Office
Office européen
des brevets

**EUROPEAN SEARCH REPORT**

Application Number

EP 15 15 8396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZENG YUNZE ET AL: "A first look at 802.11ac in action: Energy efficiency and interference characterization", 2014 IFIP NETWORKING CONFERENCE, IFIP, 2 June 2014 (2014-06-02), pages 1-9, XP032620617, DOI: 10.1109/IFIPNETWORKING.2014.6857103 [retrieved on 2014-07-16] * abstract * * page 8, column 1, paragraph 3 * * page 8; figure 7 * * page 7, column 2, paragraph VI * * page 4, column 2, paragraph B * * page 7; figure 6 * | 1-15 | INV. H04W52/02 |
| A | "IEEE Standard for Information technology-- Telecommunications and information exchange between systemsLocal and metropolitan area networks-- Specific requirements--Part 11: Wireless LAN Medium Access Control (MAC) and Physical Layer (PHY) Specifications--Amendment 4: Enhancements for Very High Throu", IEEE STANDARD, IEEE, PISCATAWAY, NJ, USA, 18 December 2013 (2013-12-18), pages 1-425, XP068055837, ISBN: 978-0-7381-8860-7 * page 207, paragraph 18.2.2.7; figure 7 * | 1,3 | TECHNICAL FIELDS SEARCHED (IPC) H04W |

-/--

The present search report has been drawn up for all claims

| Place of search | Date of completion of the search | Examiner |
|---|---|---|
| The Hague | 22 January 2016 | Tavakol, Vahid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 15 15 8396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Mohammad Farazian ET AL: "Architectures for Frequency Synthesizers" In: "Fast Hopping Frequency Generation in Digital CMOS", 12 October 2012 (2012-10-12), Springer New York, New York, NY, XP055242915, ISBN: 978-1-4614-0490-3 pages 17-43, DOI: 10.1007/978-1-4614-0490-3_2, * page 23, paragraph 6 * * page 24; figure 2.7 * * page 19, paragraph 2 * * page 19; figure 2.2 * * page 40; figure 2.24 * | 9,10 | |
| A | Matthew Gast: "802.11ac: A Survival Guide", , 2 July 2013 (2013-07-02), XP055243401, ISBN: 978-1-4493-4314-9 Retrieved from the Internet: URL:http://web.archive.org/web/20130702112449/http://chimera.labs.oreilly.com/books/1234000001739/ch02.html [retrieved on 2016-01-20] * figure 2.6c * | 12 | TECHNICAL FIELDS SEARCHED (IPC) |

The present search report has been drawn up for all claims

| Place of search | Date of completion of the search | Examiner |
|---|---|---|
| The Hague | 22 January 2016 | Tavakol, Vahid |